# EUROPÄISCHE PATENTANMELDUNG

(11) **EP 3 838 710 A1**
(43) Veröffentlichungstag der Anmeldung: **23.06.2021**
(21) Anmeldenummer: 20214652.8
(22) Anmeldetag: 16.12.2020
(51) Int. Cl.: B62B 1/12, B62B 5/00

(54) **WAGEN ZUR VERWENDUNG ALS FAHRRADANHÄNGER ODER ALS HANDWAGEN**

(30) Priorität: 19.12.2019 DE 102019135039
(71) Anmelder: Chal-Tec GmbH, 10179 Berlin (DE)
(72) Erfinder: Drossel, Benjamin, 10559 Berlin (DE)
(74) Vertreter: Holz, Christian

(57) **Zusammenfassung**

Die vorliegende Erfindung betrifft einen Wagen (1) zur Verwendung als Fahrradanhänger (1) oder als Handwagen (1) mit einem Gestell (10) mit einem Paar von Rädern (13) und mit einer Ladefläche (14) und mit einer umklappbaren Deichsel (3) mit einem Deichselkörper (33), welcher ausgebildet ist, in einer ersten Stellung mit einem Fahrrad verbunden und in einer zweiten Stellung von einer Hand eines Benutzers geführt zu werden. Der Wagen (1) ist dadurch gekennzeichnet, dass die umklappbare Deichsel (3) eine an dem Gestell (10) angeordnete Deichselhalterung (30) aufweist, wobei die Deichselhalterung (30) ausgebildet ist, den Deichselkörper (33) in der ersten Stellung und in der zweiten Stellung aufzunehmen.

## Beschreibung

Die vorliegende Erfindung betrifft einen Wagen zur Verwendung als Fahrradanhänger oder als Handwagen gemäß dem Oberbegriff des Patentanspruchs 1.

Um die Möglichkeiten und insbesondere die Kapazitäten beim Transport von Lasten mittels eines Fahrrads zu erhöhen ist es bekannt, sog. Fahrradanhänger zu verwenden. Hierbei handelt es sich üblicherweise um einspurige oder zweispurige Anhänger, welche hinter dem Fahrrad angeordnet und mit dem Fahrrad seitlich oder oberhalb des Hinterrads verbunden werden. Als Lasten können je nach Typ des Fahrradanhängers und des Anwendungsfalls Gegenstände wie z.B. Kartons, Gepäckstücke, Pakete und dergleichen aber auch z.B. Kinder oder Hunde als Lasten transportiert werden.

Zum Transport derartiger Lasten können insbesondere zweispurige Lastenanhänger verwendet werden, welche üblicherweise zwei Räder aufweisen, welche mittels einer gemeinsamen Achse in der Querrichtung verbunden sind. In der vertikalen Richtung oberhalb der Achse und mit der Achse drehbar verbunden ist ein Gestell angeordnet, welches auch als Rahmen oder als Tragkonstruktion bezeichnet werden kann. Von dem Gestell wird üblicherweise eine flache Ladefläche gebildet, auf welcher die zu transportierenden Lasten angeordnet werden können. Ggfs. können am Rand der Ladefläche in die vertikalen Richtung hervor ragende Halterungen seitlich, Hinten und bzw. oder Vorne angeordnet sein, um die Lasten beim Transport zu halten und zu sichern.

An dem Gestell ist ferner eine Deichsel vorgesehen, welche je nach Ausführung und Anwendungsfall geformt ist, in der Querrichtung seitlich oder in der vertikalen Richtung oberhalb des Hinterrads mit dem Fahrrad verbunden zu werden. Eine seitliche Befestigung mittels einer sog. Tiefdeichsel erfolgt üblicherweise im Bereich der Nabe des Hinterrads sowie üblicherweise in Fahrtrichtung links. Eine Befestigung oberhalb des Hinterrads mittels einer sog. Hochdeichsel erfolgt üblicherweise über den Gepäckträger hinweg im Bereich der Klemmung der Sattelstütze. In jedem Fall wird am Fahrrad hierzu eine Anhängerkupplung fest montiert, welche dann mit einem korrespondierenden Kupplungselement des dem Gestell abgewandten Endes der Deichsel verbunden werden kann.

Das DE 20 2013 006 204 U1 beschreibt einen multifunktionalen Wagen, umfassend eine zwei Räder sowie eine Ladefläche aufweisende Tragkonstruktion und eine an der Tragkonstruktion ausgebildete erste Aufnahmeeinrichtung zur lösbaren Befestigung einer Deichsel zum Ankuppeln an ein Fahrrad. Im befestigten Zustand ist ein Bereich der Deichsel als Befestigungsbereich in der ersten Aufnahmeeinrichtung geführt. An der Tragkonstruktion ist eine zweite Aufnahmeeinrichtung zur lösbaren Befestigung der Deichsel angeordnet. Die zweite Aufnahmeeinrichtung ist an der Tragkonstruktion in der Querrichtung neben der ersten Aufnahmeeinrichtung beabstandet vorgesehen. Die zweite Aufnahmeeinrichtung ist in Form zweier in die Tragkonstruktion eingebrachte, korrespondierend zur Querschnittsform des Befestigungsbereichs ausgebildete Öffnungen ausgebildet. Die Öffnungen der zweiten Aufnahmeeinrichtung sind derart zueinander angeordnet und ausgerichtet, dass im befestigten Zustand der Befestigungsbereich der Deichsel in einem spitzen Winkel zur Ladefläche ausgerichtet ist.

Eine Aufgabe der vorliegenden Erfindung ist es, einen Wagen zur Verwendung als Fahrradanhänger oder als Handwagen der eingangs beschriebenen Art bereit zu stellen, dessen Verwendbarkeit als Fahrradanhänger und bzw. oder als Handwagen einfacher und bzw. oder schneller vom Benutzer gewechselt werden kann als bisher bekannt. Insbesondere sollen der Aufwand, der Bauraum und bzw. oder die Kosten der Aufnahmeeinrichtungen der Tragkonstruktion reduziert werden. Zumindest soll eine Alternative zu bekannten derartigen Wagen geschaffen werden.

Die Aufgabe wird erfindungsgemäß durch einen Wagen mit den Merkmalen des Patentanspruchs 1 gelöst. Vorteilhafte Weiterbildungen sind in den Unteransprüchen beschrieben.

Somit betrifft die vorliegende Erfindung einen Wagen zur Verwendung als Fahrradanhänger oder als Handwagen mit einem Gestell mit einem Paar von Rädern und mit einer Ladefläche. Die Räder sind vorzugsweise mittels einer gemeinsamen Achse in der Querrichtung verbunden, so dass ein zweispuriger Wagen geschaffen werden kann. Eine Ausführung mit lediglich einer Achse mit einem Paar von Rädern kann auch als Karren bzw. als Handkarren bezeichnet werden. Es können jedoch auch zwei Achsen mit jeweils einem Paar von Rädern verwendet werden.

Der Wagen weist eine umklappbare Deichsel mit einem Deichselkörper auf, welcher ausgebildet ist, in einer ersten Stellung mit einem Fahrrad verbunden und in einer zweiten Stellung von einer Hand eines Benutzers geführt zu werden. Unter einem Umklappen wird eine Bewegung verstanden, mittels welcher der Deichselkörper von dem Benutzer zwischen den beiden Stellungen geklappt werden kann. Dies kann auch als Schwenken oder Drehen bezeichnet werden und erfolgt zumindest im Wesentlichen um die Längsachse des Wagens.

Der erfindungsgemäße Wagen ist dadurch gekennzeichnet, dass die umklappbare Deichsel eine an dem Gestell angeordnete Deichselhalterung aufweist, wobei die Deichselhalterung ausgebildet ist, den Deichselkörper in der ersten Stellung und in der zweiten Stellung aufzunehmen. Mit anderen Worten kann dieselbe Deichselhalterung dazu verwendet werden, den Deichselkörper in beiden Stellungen aufzunehmen und somit zu halten.

Erfindungsgemäß kann auf diese Art und Weise auf zwei separate Aufnahmeeinrichtungen als Deichselhalterungen wie aus dem DE 20 2013 006 204 U1 bekannt verzichtet werden. Dies kann den Wechsel zwischen den beiden Stellung des Deichselkörpers für den Benutzer vereinfachen. Insbesondere kann der Aufwand, den Deichselkörper in beiden Stellungen zu halten, reduziert werden, indem auf eine zweite Aufnahmeeinrichtung verzichtet werden kann. Dies kann die Kosten des Wagens hinsichtlich Material und bzw. oder Montage reduzieren. Auch kann dies den erforderlichen Bauraum am Gestell reduzieren, da dort lediglich eine Deichselhalterung angeordnet werden muss. Dies kann auch förderlich für den optischen Eindruck des Wagens bei einem Benutzer sein. Die einzige Deichselhalterung kann vorzugsweise in der Querrichtung mittig und damit auf der Symmetrieachse angeordnet werden, was den optischen Eindruck des Wagens ebenfalls für den Benutzer verbessern kann. Auch kann dies die Gestaltungsmöglichkeiten des Wagens verbessern bzw. erhöhen, da lediglich eine Deichselhalterung zu gestalten und bzw. oder anzuordnen ist.

Die Umsetzung, den Deichselkörper in beiden Stellungen aufzunehmen, kann insbesondere durch eine Drehung des Deichselkörpers um ca. 90° sowie durch eine Veränderung der Ausrichtung des Deichselkörpers gegenüber der Horizontalen erfolgen, wie weiter unten als bevorzugte Umsetzungsmöglichkeit beschrieben werden wird.

Diese Umsetzung kann jedoch auch durch andere geeignete Maßnahmen erfolgen, welche zur Realisierung dieser Merkmale führen. Beispielsweise kann ein teleskopisches Herausziehen des Deichselkörpers aus der Deichselhalterung und darauffolgendes Umschwenken z.B. über ein Scharnier erfolgen, welches beispielsweise auch um einen Haltestifte ausgeführt sein kann. Auch ein Aufnehmen des Deichselkörpers über einer Steck/Rast-Mechanik innerhalb der Deichselhalterung könnte ermöglicht werden. Derartige Maßnahmen könnten jedoch konstruktiv und bzw. oder fertigungstechnisch komplexer sein.

Gemäß einem Aspekt der vorliegenden Erfindung ist die Deichselhalterung ausgebildet, den Deichselkörper in der ersten Stellung zumindest im Wesentlichen in der Horizontalen verlaufend und in der zweiten Stellung schräg zur Horizontalen in der vertikalen Richtung nach oben zeigend aufzunehmen. Unter einer schrägen Ausrichtung zur Horizontalen kann auch eine Ausrichtung in einem spitzen Winkel zur Ladefläche wie bei dem DE 20 2013 006 204 U1 verstanden werden.

Hierdurch kann in der ersten Stellung eine geeignete Ausrichtung des Deichselkörpers gegenüber dem Gestell ermöglicht werden, um den Deichselkörper an einem Fahrrad, insbesondere als Tiefdeichsel, zu befestigen und so den Wagen in der ersten Stellung des Deichselkörpers als Fahrradwagen verwenden zu können. Vergleichbar kann in der zweiten Stellung eine geeignete Ausrichtung des Deichselkörpers gegenüber dem Gestell ermöglicht werden, um den Deichselkörper für eine Hand eines Benutzers erreichbar zu machen, so dass der Wagen in dieser zweiten Stellung des Deichselkörpers als Handwagen bzw. als Handkarre verwendet werden kann.

Gemäß einem weiteren Aspekt der vorliegenden Erfindung weist die Deichselhalterung einen horizontalen Aufnahmebereich auf, welcher ausgebildet ist, einen Befestigungsbereich des Deichselkörpers in der ersten Stellung aufzunehmen, und die Deichselhalterung weist einen schrägen Aufnahmebereich auf, welcher ausgebildet ist, den Befestigungsbereich des Deichselkörpers in der zweiten Stellung aufzunehmen. Dies kann die Anordnung des Deichselkörpers in den beiden Stellungen wie zuvor beschrieben begünstigen. Insbesondere können beide Stellungen des Deichselkörpers gegenüber derselben Deichselhalterung eingenommen werden, so dass beide Stellungen und damit die Nutzung des erfindungsgemäßen Wagens sowohl als Fahrradanhänger als auch als Handwagen bzw. Handkarren mit lediglich einer Deichselhalterung ermöglicht werden kann.

Gemäß einem weiteren Aspekt der vorliegenden Erfindung weist die Deichselhalterung, vorzugsweise ein horizontaler Aufnahmebereich der Deichselhalterung, wenigstens ein Paar von Durchgangsöffnungen auf, welche ausgebildet sind, in der ersten Stellung des Deichselkörpers mittels eines Verbindungselements mit einem Paar von horizontalen Durchgangsöffnungen des Deichselkörpers, vorzugsweise eines Befestigungsbereichs des Deichselkörpers, verbunden zu werden. Vorzugsweise liegen sich die beiden Durchgangsöffnungen des Paares hinsichtlich des Deichselkörpers diametral gegenüber.

Dies kann eine einfache, flexible und bzw. oder kostengünstige Möglichkeit einer Verbindung zwischen dem Deichselkörper und der Deichselhalterung bieten. Diese Verbindung kann insbesondere für den Benutzer einfach und bzw. oder schnell herzustellen sowie aufzuheben sein, was den Wechsel der Verwendung des erfindungsgemäßen Wagens sowohl als Fahrradanhänger als auch als Handwagen bzw. Handkarren begünstigen und bzw. oder beschleunigen kann. Hierdurch kann die wechselnde Nutzung des erfindungsgemäßen Wagens für den Benutzer attraktiver und daher auch häufig verwendet werden. Als Verbindungselement können z.B. Bolzen, Schauben und dergleichen verwendet werden, welche z.B. durch Sicherungsstifte, Muttern und dergleichen gesichert werden können.

Gemäß einem weiteren Aspekt der vorliegenden Erfindung weist die Deichselhalterung, vorzugsweise ein schräger Aufnahmebereich der Deichselhalterung, wenigstens ein Paar von Durchgangsöffnungen auf, welche ausgebildet sind, in der zweiten Stellung des Deichselkörpers mittels eines Verbindungselements mit einem Paar von vertikalen Durchgangsöffnungen des Deichselkörpers, vorzugsweise eines Befestigungsbereichs des Deichselkörpers, verbunden zu werden. Hierdurch können die zuvor beschriebenen Eigenschaften und Vorteile auch auf die zweite Stellung des Deichselkörpers angewendet werden.

Gemäß einem weiteren Aspekt der vorliegenden Erfindung weist die Deichselhalterung wenigstens ein Paar von Durchgangsöffnungen auf, welche ausgebildet sind, in der ersten Stellung des Deichselkörpers mittels eines Verbindungselements mit einem Paar von horizontalen Durchgangsöffnungen des Deichselkörpers, vorzugsweise eines Befestigungsbereichs des Deichselkörpers, und in der zweiten Stellung des Deichselkörpers mittels eines Verbindungselements mit einem Paar von vertikalen Durchgangsöffnungen des Deichselkörpers, vorzugsweise eines Befestigungsbereichs des Deichselkörpers, verbunden zu werden. Mit anderen Worten kann dasselbe Paar von Durchgangsöffnungen der Deichselhalterung verwendet werden, um in beiden Stellung des Deichselkörpers mit unterschiedlichen Durchgangsöffnungen des Deichselkörpers verbunden zu werden und diesen somit zu halten. Dies kann den Aufwand und insbesondere den Bauraum der Deichselhalterung gering halten.

In jedem Fall einer Verbindung zwischen Deichselhalterung und Deichselkörper durch die zuvor beschriebenen korrespondierenden Durchgangsöffnungen kann die Stabilität der Verbindung dadurch erhöht werden, indem in wenigstens einer der beiden Stellungen und vorzugsweise in beiden Stellungen jeweils zwei Paare von Durchgangsöffnungen seitens der Deichselhalterung sowie seitens des Deichselkörpers verwendet und durch jeweils ein Verbindungselement miteinander verbunden werden. Dies kann insbesondere ein Verdrehen des Deichselkörpers gegenüber der Deichselhalterung um das eine Verbindungselement als Drehachse verhindern, was die Stabilität der Verbindung insbesondere für den Benutzer merklich erhöhen kann. Dies kann auch das Vertrauen des Benutzers in die Verwendung des erfindungsgemäßen Wagens sowohl als Fahrradanhänger als auch als Handwagen bzw. Handkarren erhöhen.

Gemäß einem weiteren Aspekt der vorliegenden Erfindung ist das Verbindungselement ausgebildet, sich selbst zu sichern. Hierzu kann beispielsweise ein Rastmechanismus oder dergleichen am Verbindungselement vorgesehen werden, welcher einrasten und das Verbindungselement selbsttätig halten kann, wenn das Verbindungselement durch die korrespondierenden Durchgangsöffnungen des Deichselkörpers und der Deichselhalterung geführt wird. Es kann auch ein zusätzliches Sicherungselement wie z.B. ein Sicherungsstift und dergleichen vorgesehen sein, welches quer zum Verbindungselement in dessen Ende eingeführt wird, welches nach dem Einführen des Verbindungselements durch die korrespondierenden Durchgangsöffnungen des Deichselkörpers und der Deichselhalterung hindurch über die Deichselhalterung hinaus steht. Ein derartiges Verbindungselement kann z.B. ein Bolzen sein, was die Umsetzung einfach, sicher und kostengünstig halten kann. Alternativ kann das über die Deichselhalterung hinausstehende Ende des Verbindungselements auch mittels eines Klemmelements wie z.B. mittels eines Sicherungsrings gehalten und das Verbindungselement hierdurch gehalten und gesichert werden.

Gemäß einem weiteren Aspekt der vorliegenden Erfindung weist der Wagen einen ausklappbaren Ständer mit einer Ständerhalterung, welche an dem Gestell angeordnet ist, und mit einem Standelement auf, welches klappbar von der Ständerhalterung gehalten wird, wobei die Ständerhalterung eine Aussparung aufweist, innerhalb welcher das Standelement zwischen einem eingeklappten Zustand und einem ausgeklappten Zustand geklappt werden kann. Hierdurch kann eine Möglichkeit geschaffen werden, den Wagen sowohl als Fahrradanhänger als auch als Handwagen bzw. als Handkarre auf das ausgeklappte Standelement abstützen, welches hierzu auf einem Untergrund aufgestellt werden kann. Dies kann den Komfort der Verwendung für den Benutzer erhöhen. Dabei kann diese Möglichkeit durch ein Klappen besonders einfach, schnell und bzw. oder bequem für den Benutzer zur Verfügung gestellt werden. Die Umsetzung kann technisch bzw. mechanisch einfach und entsprechend kostengünstig, langlebig und bzw. oder platzsparend erfolgen.

Vorzugsweise erfolgt das Ausklappen des Standelements in der Längsrichtung und insbesondere entlang der Längsachse als Symmetrieachse des Wagens in der Querrichtung. Dies kann das Standelement für den Benutzer zum Einklappen und bzw. oder zum Ausklappen von beiden Seiten des Wagens in der Querrichtung gleichermaßen gut erreichbar machen.

Zusätzlich oder unabhängig hiervon kann das Standelement vorzugsweise in der Längsrichtung vor den beiden Rädern angeordnet sein. Hierdurch kann ein sicherer Stand geschaffen werden, da sich üblicherweise der Schwerpunkt derartiger Wagen vor den beiden Rädern befindet und somit durch das dort angeordnete Standelement gegenüber dem Untergrund abgestützt werden kann.

In jedem Fall sind der ausklappbare Ständer und insbesondere dessen Standelement ausgebildet, im ausgeklappten Zustand den Wagen und insbesondere dessen Ladefläche zumindest im Wesentlichen in der Horizontalen zu halten. Dies kann die Verwendung des Wagens und insbesondere die Nutzung der Ladefläche des Wagens für den Benutzer begünstigen.

Gemäß einem weiteren Aspekt der vorliegenden Erfindung wird die Aussparung von zwei Aussparungsenden begrenzt und die Aussparung weist zwischen den beiden Aussparungsenden, vorzugsweise mittig, eine Aussparungseinschnürung auf. Mit anderen Worten verengt sich die Aussparung zwischen den beiden Aussparungsenden, so dass sich die beiden Aussparungsenden für das Standelement als bevorzugte Stellungen ergeben. Sozusagen wird das Standelement von der Aussparungseinschnürung entlang der länglichen Erstreckung der Aussparung zu einem der beiden Aussparungsenden hin gedrückt. Dies kann die sichere sowie selbsttätigte Positionierung des Standelements an einem der beiden Aussparungsenden begünstigen. Insbesondere kann das Standelement an dem jeweiligen Aussparungsende und damit in der entsprechenden Stellung von der Aussparungseinschnürung gehalten werden.

Gemäß einem weiteren Aspekt der vorliegenden Erfindung ist das Standelement ausgebildet, quer zur Klapprichtung einzufedern, wenn das Standelement zwischen dem eingeklappten Zustand und dem ausgeklappten Zustand geklappt wird. Dies kann es begünstigen, das Standelement über die Aussparungseinschnürung hinweg zu bewegen. Auch kann hierdurch das Standelement an dem jeweiligen Aussparungsende gehalten werden. Durch die Wechselwirkung von federndem Standelement und Aussparungseinschnürung kann dies besonders einfach, kostengünstig, robust und bzw. oder platzsparend umgesetzt werden.

Gemäß einem weiteren Aspekt der vorliegenden Erfindung weist das Standelement zwei offene Enden auf, welche jeweils in eine korrespondierende Durchgangsöffnung der Ständerhalterung derart eingreifen, dass das Standelement in den Durchgangsöffnungen der Ständerhalterung drehbeweglich gehalten wird. Hierdurch kann das Klappen, Drehen bzw. Schwenken des Standelements gegenüber der Ständerhalterung besonders einfach, kostengünstig, robust und bzw. oder platzsparend umgesetzt werden.

Gemäß einem weiteren Aspekt der vorliegenden Erfindung weist die Ladefläche in der Querrichtung seitlich jeweils einen in der vertikalen Richtung nach oben ragenden Rand auf. Von dem Rand können Lasten wie insbesondere Gegenstände wie z.B. Kartons, Pakete und dergleichen zumindest in der seitlichen Richtung einfach und wirkungsvoll auf der Ladefläche gehalten werden. Dabei gleichzeitig den Rand bzw. einen weiteren Rand an dem in einer Längsrichtung vorderen und bzw. oder hinteren Ende der Ladefläche ebenfalls in der vertikalen Richtung nach oben ragen zu lassen kann diese Eigenschaften auch in der Längsrichtung bieten. Alternativ die Ladefläche an dem in einer Längsrichtung vorderen und bzw. oder hinteren Ende ohne Rand auszubilden kann das Be- und bzw. oder Entladen in der Längsrichtung begünstigen bzw. vereinfachen.

Gemäß einem weiteren Aspekt der vorliegenden Erfindung weisen die Ränder der Ladefläche jeweils wenigstens eine Halterung, vorzugsweise eine Durchgangsöffnung, auf, welche ausgebildet ist, zum Halten von auf der Ladefläche angeordneten Lasten verwendet zu werden. Dies kann es ermöglichen bzw. begünstigen, die auf der Ladefläche angeordnete Lasten z.B. mittels Seilen, Laschen, Bändern, Gurten und dergleichen dort zu sichern, indem die Seilen etc. vorzugsweise durch die Durchgangsöffnungen gezogen und vorzugsweise über die Lasten drüber und bzw. oder um die Lasten herum geführt sowie an den Rändern und bzw. oder miteinander z.B. verknotet werden. Dies kann die Verwendung z.B. von Seilen etc. zur Sicherung von Lasten auf der Ladefläche des Wagens begünstigen.

Gemäß einem weiteren Aspekt der vorliegenden Erfindung weist der Deichselkörper an seinem dem Gestell abgewandten Ende ein Kupplungselement auf, welches ausgebildet ist, in der ersten Stellung des Deichselkörpers mit einem Fahrrad verbunden zu werden. Dies kann die Verwendung des Wagens als Fahrradanhänger ermöglichen bzw. begünstigen.

Gemäß einem weiteren Aspekt der vorliegenden Erfindung weist der Deichselkörper im Bereich seines dem Gestell abgewandten Endes einen Griffbereich auf, welcher ausgebildet ist, von einer Hand eines Benutzers in der zweiten Stellung des Deichselkörpers gegriffen zu werden. Dies kann die Verwendung des Wagens als Handwagen bzw. als Handkarren ermöglichen bzw. begünstigen.

Ein Ausführungsbeispiel und weitere Vorteile der Erfindung werden nachstehend im Zusammenhang mit den folgenden Figuren rein schematisch dargestellt und näher erläutert. Darin zeigt:
- Fig. 1: eine perspektivische schematische Darstellung eines erfindungsgemäßen Wagens in einer ersten Stellung als Fahrradanhänger;
- Fig. 2: eine weitere perspektivische schematische Darstellung des Wagens der Fig. 1;
- Fig. 3: eine seitliche schematische Darstellung des Wagens der Fig. 1 von rechts;
- Fig. 4: eine schematische Darstellung des Wagens der Fig. 1 von vorne;
- Fig. 5: eine schematische Darstellung des Wagens der Fig. 1 von oben;
- Fig. 6: eine schematische Darstellung des Wagens der Fig. 1 von unten;
- Fig. 7: eine weitere perspektivische schematische Darstellung des Wagens der Fig. 1;
- Fig. 8: eine perspektivische schematische Darstellung des Wagens in einer zweiten Stellung als Handwagen;
- Fig. 9: eine weitere perspektivische schematische Darstellung des Wagens der Fig. 8;
- Fig. 10: eine seitliche schematische Darstellung des Wagens der Fig. 8 von rechts
- Fig. 11: eine schematische Darstellung des Wagens der Fig. 8 von vorne;
- Fig. 12: die schematische Darstellung der Fig. 7 ohne Deichselkörper;
- Fig. 13: eine perspektivische schematische Darstellung eines Deichselkörpers;
- Fig. 14: eine perspektivische schematische Darstellung einer Deichselhalterung;
- Fig. 15: eine weitere perspektivische schematische Darstellung der Deichselhalterung;
- Fig. 16: eine perspektivische schematische Darstellung eines ausklappbaren Ständers mit eingeklapptem Standelement;
- Fig. 17: eine perspektivische schematische Darstellung des ausklappbaren Ständers mit ausgeklapptem Standelement;
- Fig. 18: die schematische Darstellung der Fig. 16 von unten;
- Fig. 19: die schematische Darstellung der Fig. 17 von unten;
- Fig. 20: die schematische Darstellung der Fig. 16 von vorne;
- Fig. 21: die schematische Darstellung der Fig. 17 von vorne;
- Fig. 22: die schematische Darstellung der Fig. 16 von rechts; und
- Fig. 23: die schematische Darstellung der Fig. 17 von rechts.

Die o.g. Figuren werden in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann. Die Längsrichtung X und die Querrichtung Y bilden gemeinsam die Horizontale X, Y, welche auch als horizontale Ebene X, Y bezeichnet werden kann.

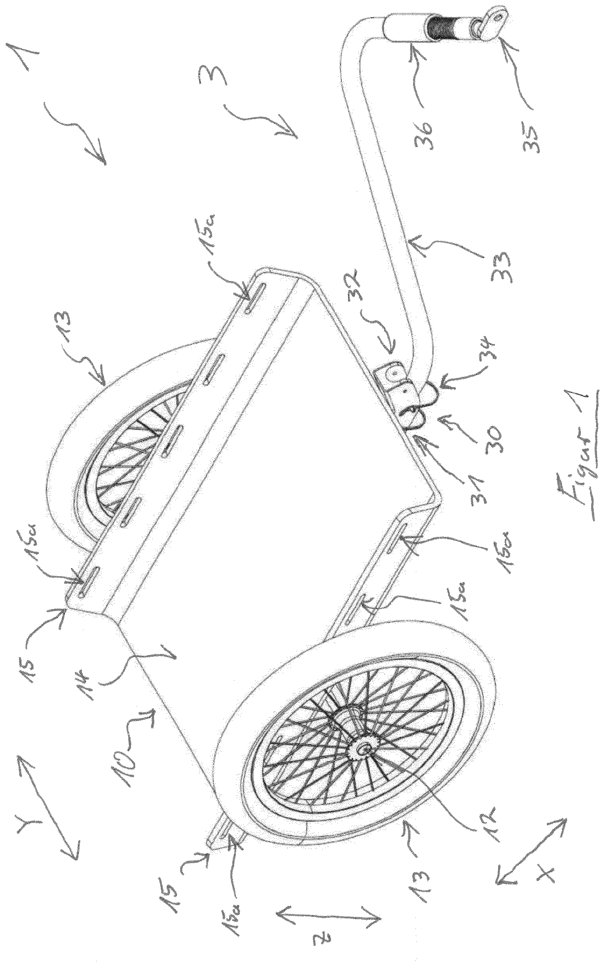

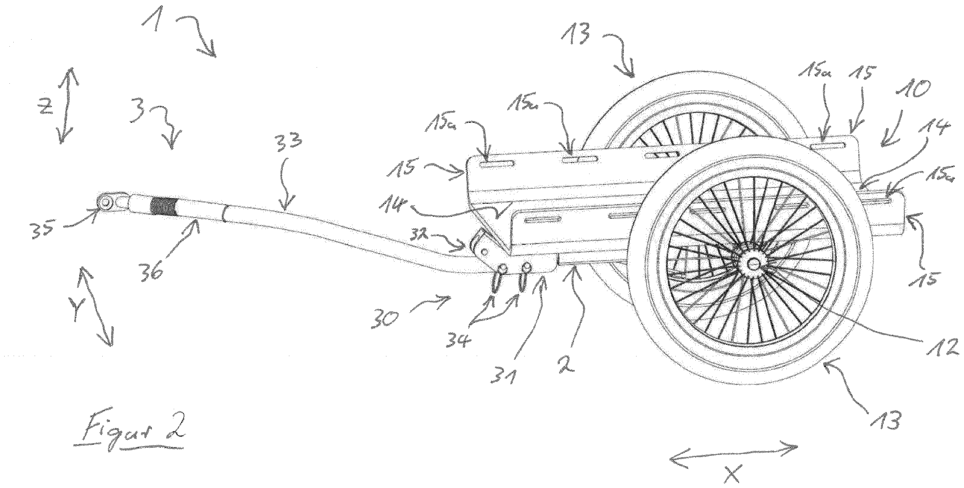

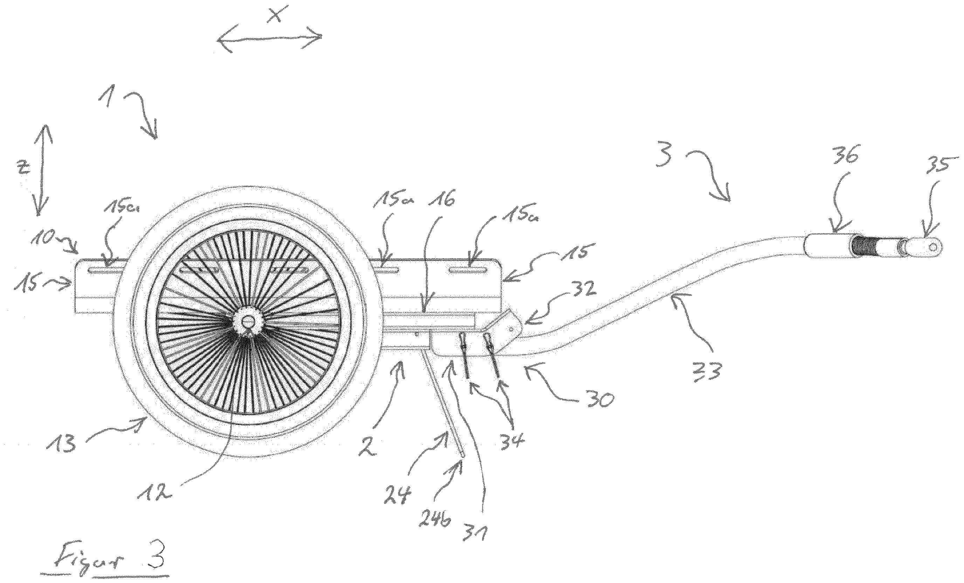

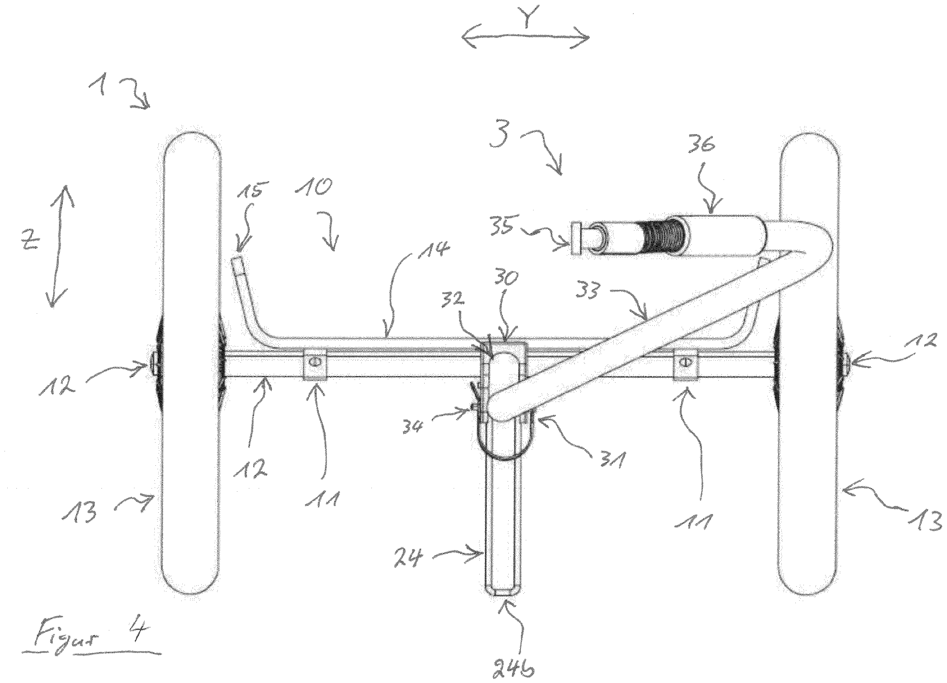

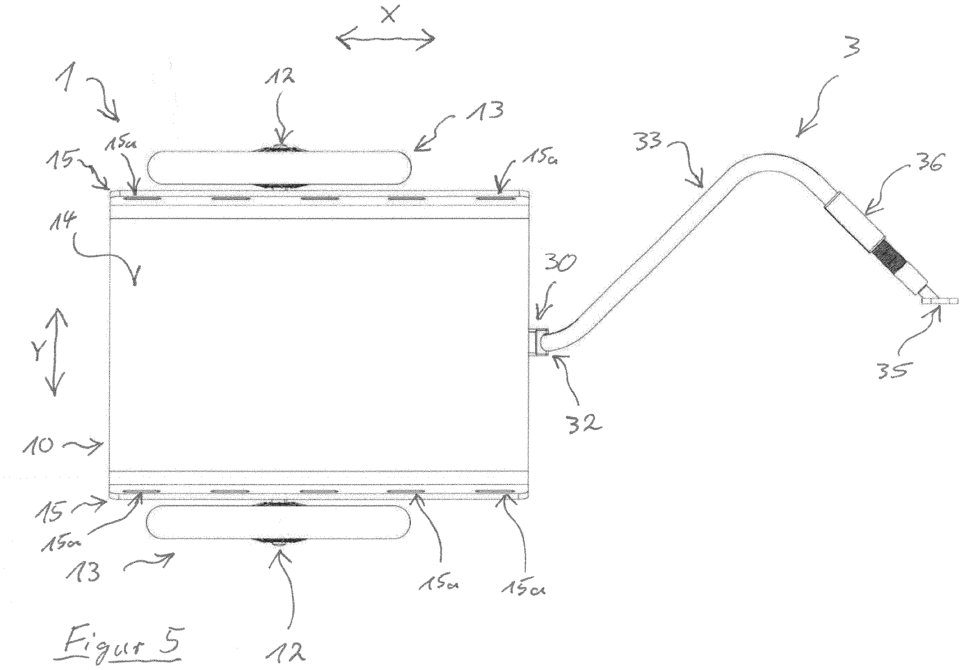

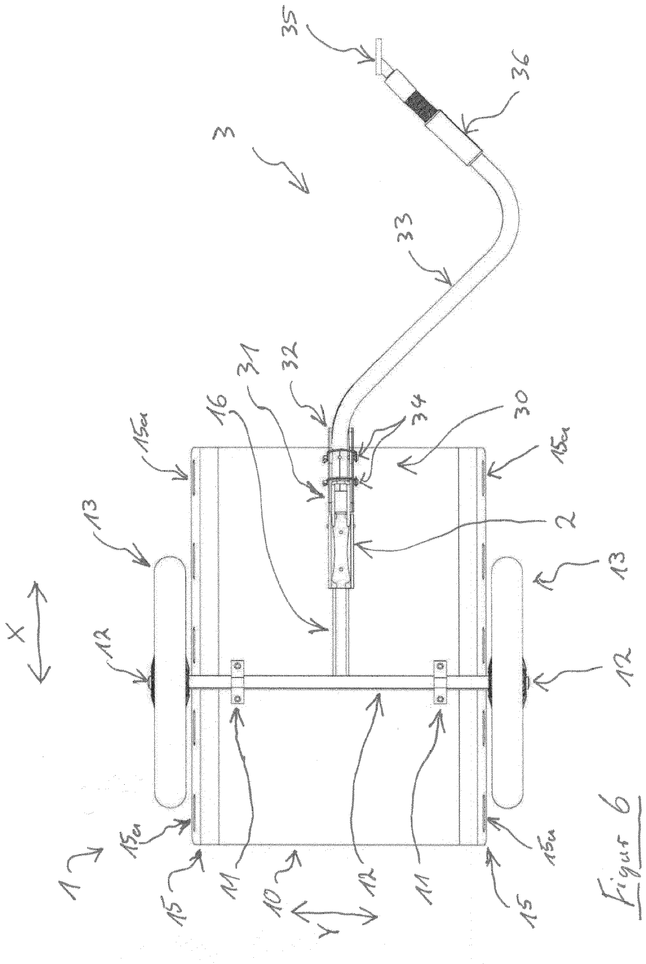

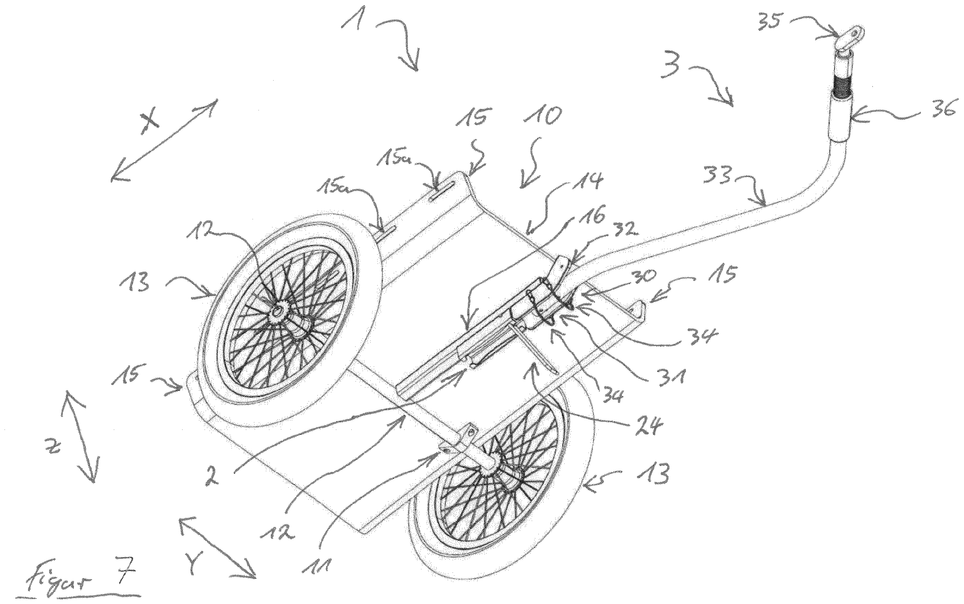

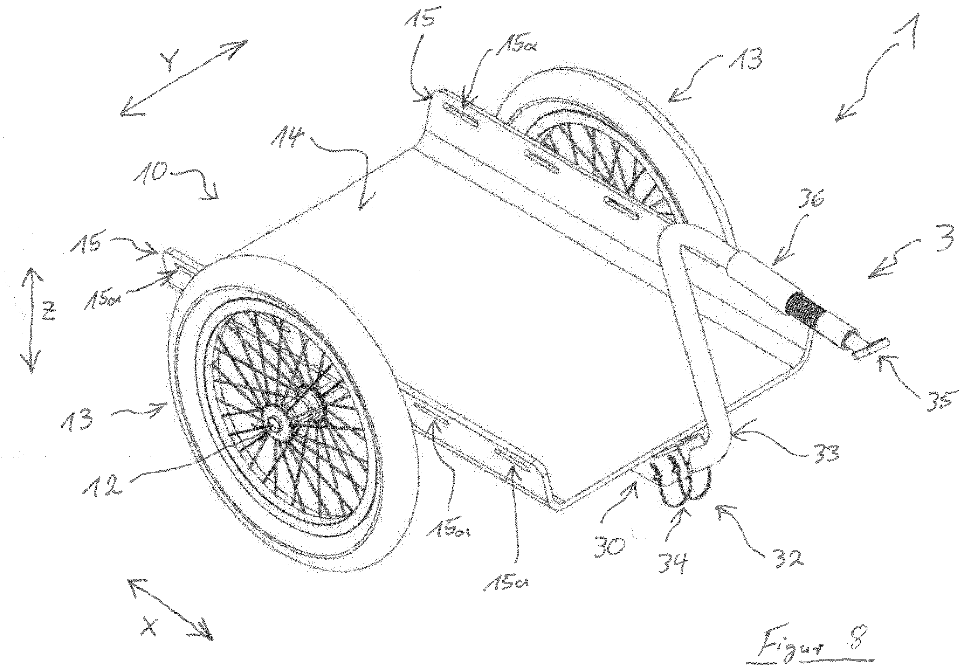

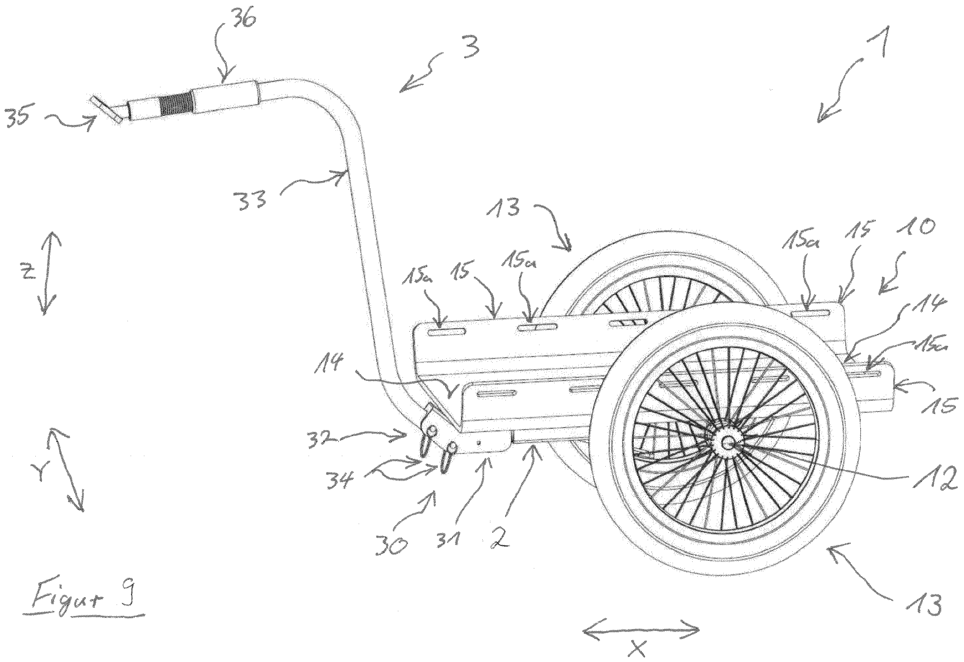

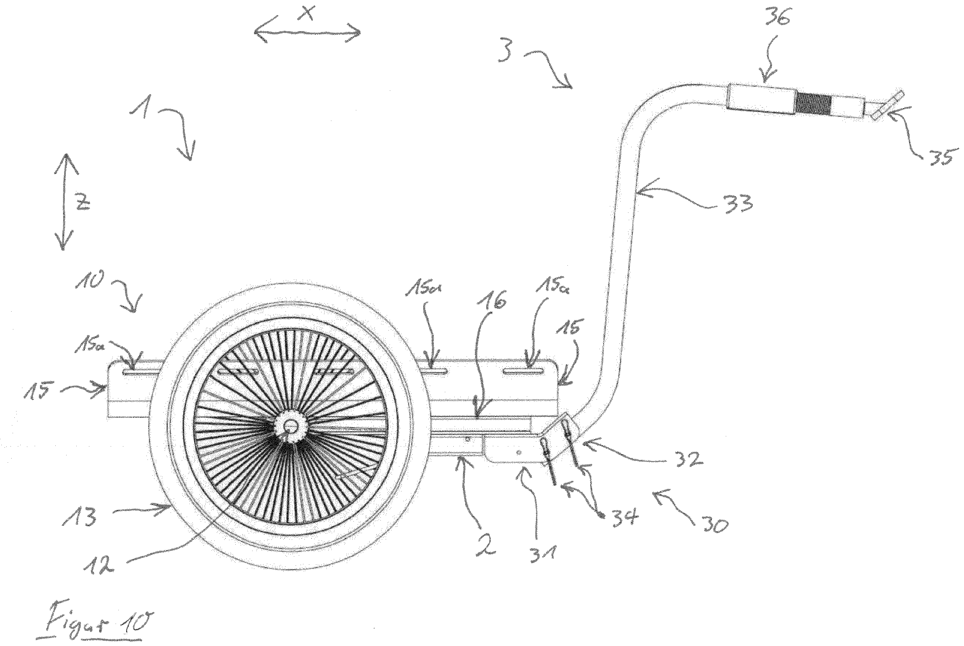

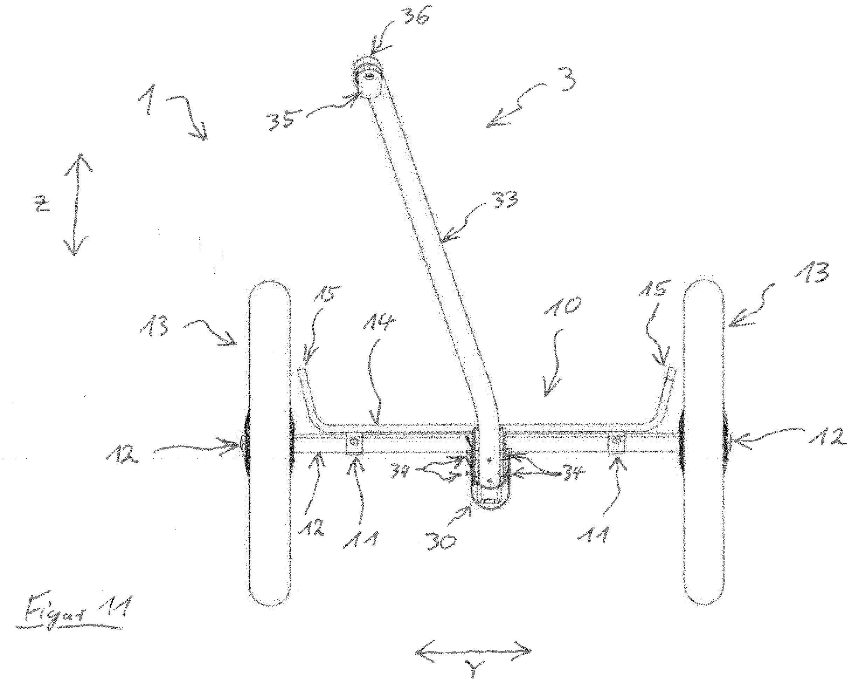

In den Fig. 1 bis 7 wird ein erfindungsgemäßer Wagen 1 als Fahrradanhänger 1 verwendbar dargestellt. In den Fig. 8 bis 11 wird der erfindungsgemäße Wagen 1 als Handwagen 1 verwendbar dargestellt. Der Wagen 1 weist ein Gestell 10 auf, welches auch als Rahmen 10 oder als Tragkonstruktion 10 bezeichnet werden kann.

Zum Gestell 10 gehört eine in der Querrichtung Y U-förmig ausgebildete Ladefläche 14, welche besonders einfach, kostengünstig und gleichzeitig optisch für einen Benutzer ansprechend aus einem Holzbrett einstückig ausgebildet sein kann. Die Ladefläche 14 weist in dem betrachteten Ausführungsbespiel seitlich nach oben gebogene Ränder 15 auf, welche die Ladefläche 14 in der Querrichtung Y begrenzen und in der vertikalen Richtung Z nach oben ragen. Hierdurch können Lasten (nicht dargestellt), welche auf der Ladefläche 14 transportiert werden sollen, in der Querrichtung Y gehalten werden. Die gebogenen Ränder 15 weisen jeweils als Halterungen 15a fünf schlitzartige Durchgangsöffnungen 15a auf, welche sich jeweils länglich in der Längsrichtung X erstrecken. Durch diese Durchgangsöffnungen 15a können z.B. Seilen, Bänder, Gurte und dergleichen geführt werden, um die auf der Ladefläche 14 angeordneten Lasten sichern zu können. In der Längsrichtung X nach vorne und nach hinten ist die Ladefläche 14 offen ausgebildet, was das Be- und Entladen erleichtern kann.

An der Unterseite der Ladefläche 14 sind zwei Achslagerungen 11 derart angeordnet, dass in der Querrichtung Y eine Achse 12 von den beiden Achslagerungen 11 des Gestells 10 drehbar gehalten werden kann. Seitlich an der Achse 12 ist jeweils ein Rad 13 feststehend angeordnet. Hierdurch kann eine Rollbarkeit des Gestells 10 gegenüber einem Untergrund (nicht dargestellt) mittels der Räder 13 und Achse 12 ermöglicht werden.

An der Unterseite der Ladefläche 14 ist ferner eine Stützschiene 16 in der Längsrichtung X verlaufend vor der Achse 12 feststehend angeordnet. Die Stützschiene 16 erstreckt sich fast bis zur vorderen Kante der Ladefläche 14. An der Stützschiene 16 sind in der vertikalen Richtung von unten der Achse 12 zugewandt ein ausklappbarer Ständer 2 und der Achse 12 abgewandt eine Deichselhalterung 30 einer umklappbaren Deichseln 3 feststehend angeordnet.

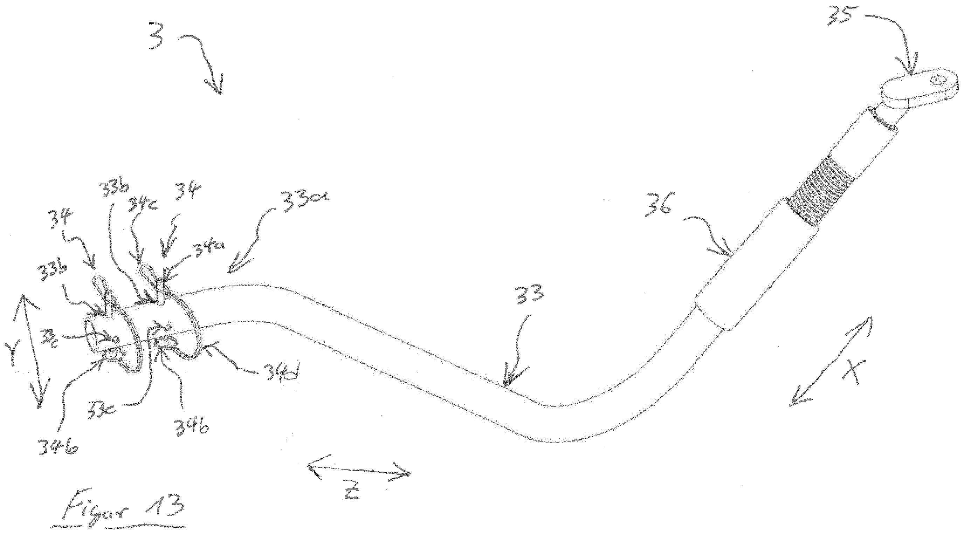

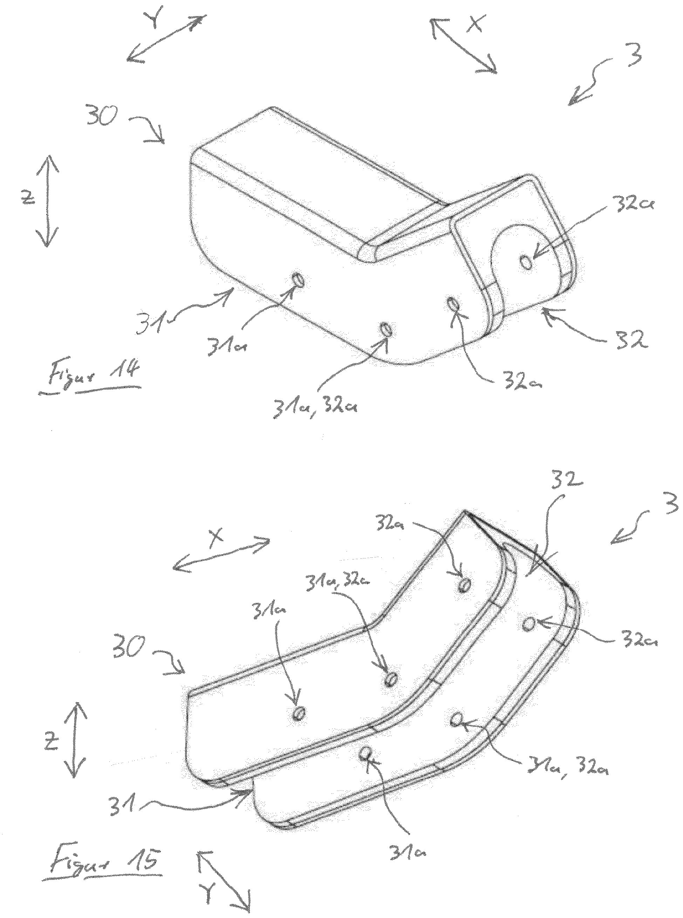

Die Verwendbarkeit des Wagens 1 als Fahrradanhänger 1 oder als Handwagen 1 kann durch die Ausrichtung und Anordnung eines Deichselkörpers 33 der umklappbaren Deichsel 3 erfolgen. Wie z.B. in der Fig. 13 perspektivisch dargestellt, weist der Deichselkörper 33 einen geschwungenen Verlauf auf, welcher es dem Deichselkörper 33 erlaubt, in seiner ersten Stellung im Wesentlichen in der Horizontalen X, Y ausgerichtet mit einem Befestigungsbereich 33a des Deichselkörpers 33 von einem horizontalen Aufnahmebereich 31 der Deichselhalterung 30, siehe z.B. Fig. 14 und 15, feststehend gehalten und als Tiefdeichsel mittels eines Kupplungselements 35 in Form einer Fahrradanhängerkupplung 35 seitlich an der Nabe des Hinterrads eines Fahrrads (nicht dargestellt) befestigt zu werden.

Wird der Deichselkörper 33 um ca. 90° gedreht und der Befestigungsbereich 33a des Deichselkörpers 33 von einem schrägen Aufnahmebereich 32 der Deichselhalterung 30, siehe z.B. Fig. 14 und 15, feststehend gehalten, so erstreckt sich der Deichselkörper 33 in der Querrichtung Y mittig und in der Längsrichtung X sowie in der vertikalen Richtung Z derart nach vorne und oben, so dass ein Griffbereich 36 des Deichselkörpers 33 nahe der Fahrradanhängerkupplung 36 von einer Hand des Benutzer bequem erreicht werden kann, um den Wagen 1 als Handwagen 1 in der Längsrichtung X zu ziehen oder zu schieben. Insgesamt ist der Deichselkörper 33 als Rohr zylindrisch ausgebildet, was eine hohe Stabilität bei geringen Herstellungskosten ermöglichen kann. Auch kann dies den Griffbereich 36 für den Benutzer gut umgreifbar machen.

Der Befestigungsbereich 33a des Deichselkörpers 33 weist insgesamt vier Paare von einander diametral gegenüberliegenden Durchgangsöffnungen 33b, 33c auf. Dabei sind jeweils zwei Paare zueinander um ca. 90° versetzt angeordnet und gegenüber den anderen beiden Paare in der länglichen Erstreckungsrichtung des Befestigungsbereichs 33a des Deichselkörpers 33 versetzt angeordnet.

Zwei Paare von horizontalen Durchgangsöffnungen 33b des Befestigungsbereichs 33a des Deichselkörpers 33 sind dabei ausgebildet, mit der Deichselhalterung 30 verbunden zu werden, wenn der Deichselkörper 33 im Wesentlichen horizontal ausgerichtet ist. Dann wird der Befestigungsbereich 33a des Deichselkörpers 33 in dem horizontalen Aufnahmebereich 31 der Deichselhalterung 30 angeordnet, welcher halbrund ausgebildet ist und seinerseits zwei Paare einander diametral gegenüberliegender Durchgangsöffnungen 31a aufweist, welche in Ausgestaltung und Anordnung mit den horizontalen Durchgangsöffnungen 33b des Befestigungsbereichs 33a des Deichselkörpers 33 korrespondieren.

Sind die horizontalen Durchgangsöffnungen 33b des Befestigungsbereichs 33a des Deichselkörpers 33 von Benutzer durch Drehen um die Achse der Längsrichtung X sowie durch Positionieren entlang der Längsrichtung X in Deckung mit den Durchgangsöffnungen 31a des horizontalen Aufnahmebereichs 31 der Deichselhalterung 30 gebracht worden, so können zwei Verbindungselemente 34 vom Benutzer durch die einander überlagernden Durchgangsöffnungen 31a, 33b geschoben werden. Ein Bolzen 34a des jeweiligen Verbindungselements 34 kann dann soweit durch die einander überlagernden Durchgangsöffnungen 31a, 33b geschoben werden, bis der Bolzen 34a mit seinem Bolzenkopf 34b von außen an der Deichselhalterung 30 anliegt. Das gegenüberliegende Ende des Bolzens 34a kann jeweils mittels eines Klemmelements 34c gesichert werden, so dass der Bolzen 34a in den einander überlagernden Durchgangsöffnungen 31a, 33b fixiert werden kann. Das Klemmelement 34c ist jeweils mittels einer Verliersicherung 34d z.B. in Form eines Metallbands bogenförmig mit dem Bolzenkopf 34b verbunden, so dass jedes Verbindungselement 34 einteilig ausgebildet und hierdurch vom Benutzer einfacher verwendet werden kann.

In dem horizontalen Aufnahmebereich 31 der Deichselhalterung 30 wie zuvor beschrieben gehalten befindet sich der Deichselkörper 33 in seiner ersten Stellung. Das Kupplungselement 35 des Deichselkörpers 33 kann nun vom Benutzer mit der korrespondierenden Halterung der Nabe des Fahrrads verbunden und so der Wagen 1 als Fahrradanhänger 1 verwendet werden, siehe z.B. Fig. 1 bis 7.

Soll der Wagen 1 stattdessen als Handwagen 1 verwendet werden, so kann der Benutzer die Klemmelemente 34c von den Bolzen 34a entfernen und die beiden Verbindungselemente 34 mit einer Hand aus den einander überlagernden Durchgangsöffnungen 31a, 33b heraus ziehen. Mit der anderen Hand kann der Benutzer den nun losen Deichselkörper 33 halten. Hierzu kann der Wagen 1 ggfs. auf seiner hinteren Kante hochkant aufgestellt worden sein, um den Zugang zu der Deichselhalterung 30 auf der Unterseite des Gestells 10 zu erleichtern sowie um den Wagen 1 stabil zu positionieren.

Nun kann der Benutzer den Deichselkörper 33 um 90° derart drehen, so dass der Griffbereich 36 des Deichselkörpers 33 in der vertikalen Richtung Z nach oben zeigt. In dieser Orientierung kann der Benutzer den Befestigungsbereich 33a des Deichselkörpers 33 in den schrägen Aufnahmebereich 32 der Deichselhalterung 30 einsetzen, so dass der zylindrische Befestigungsbereich 33a des Deichselkörpers 33 an dem halbrunden Aufnahmebereich 32 der Deichselhalterung 30 anliegt. Dabei sind die zwei Paare von vertikalen Durchgangsöffnungen 33c des Befestigungsbereichs 33a des Deichselkörpers 33 mit zwei korrespondierenden Paaren von Durchgangsöffnungen 32a des schrägen Aufnahmebereichs 32 der Deichselhalterung 30 in Deckung zu bringen. Das in der vertikalen Richtung Z untere Paar von Durchgangsöffnungen 32a des schrägen Aufnahmebereichs 32 der Deichselhalterung 30 bildet dabei das vordere Paar von Durchgangsöffnungen 31a des horizontalen Aufnahmebereichs 31 der Deichselhalterung 30, d.h. das untere Paar von Durchgangsöffnungen 32a des schrägen Aufnahmebereichs 32 der Deichselhalterung 30 kann in jeder Stellung des Deichselkörpers 33 verwendet werden.

In dieser Anordnung der sich überlagernden Durchgangsöffnungen 32a, 33c kann der Deichselkörper 33 mit den beiden Verbindungselementen 34 wie zuvor beschrieben wieder mit der Deichselhalterung 30 verbunden werden. In dem vertikalen Aufnahmebereich 32 der Deichselhalterung 30 wie zuvor beschrieben gehalten befindet sich der Deichselkörper 33 in seiner zweiten Stellung. Der Griffbereich 36 des Deichselkörpers 33 kann nun von dem Benutzer gegriffen und so der Wagen 1 als Handwagen 1 verwendet werden, siehe z.B. Fig. 8 bis 11.

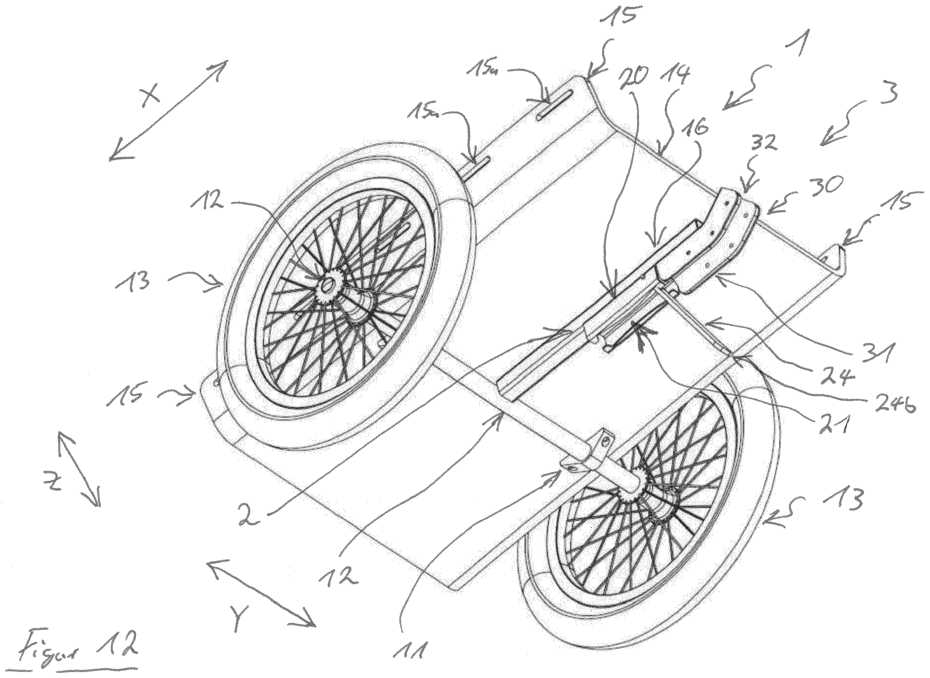

Um den Wagen 1 sowohl als Fahrradanhänger 1, insbesondere wenn dieser nicht mit einem Fahrrad verbunden ist, als auch als Handwagen 1 auf einem Untergrund abstellen zu können, weist der Wagen 1 den bereits zuvor erwähnten ausklappbaren Ständer 2 auf, welcher in der vertikalen Richtung Z unterhalb des Gestells 10 und in der Längsrichtung X hinter der Deichselhalterung 30 sowie vor der Achse 12 angeordnet ist, siehe z.B. Fig. 12.

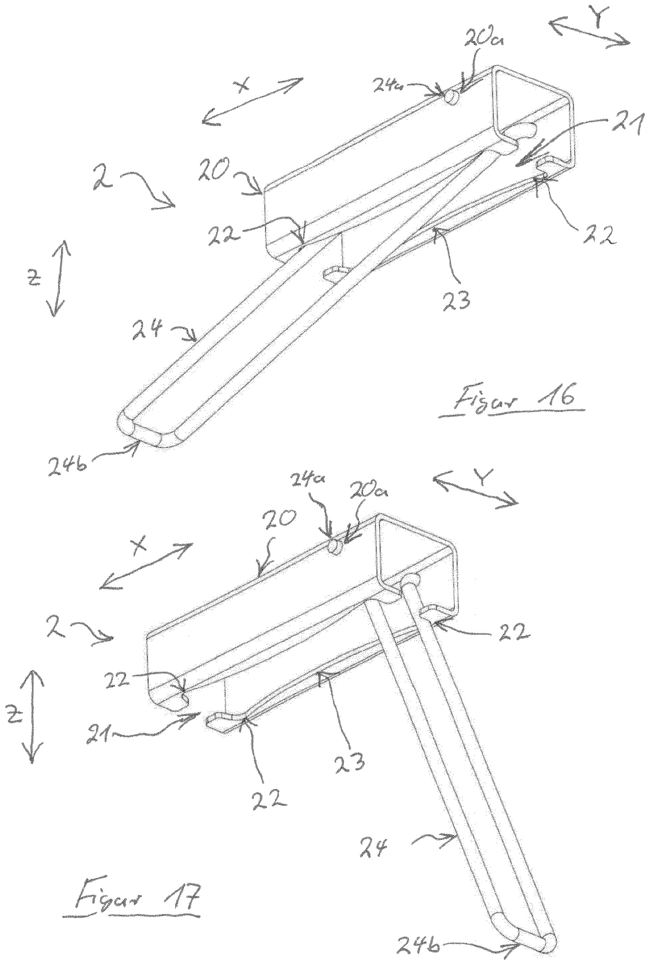

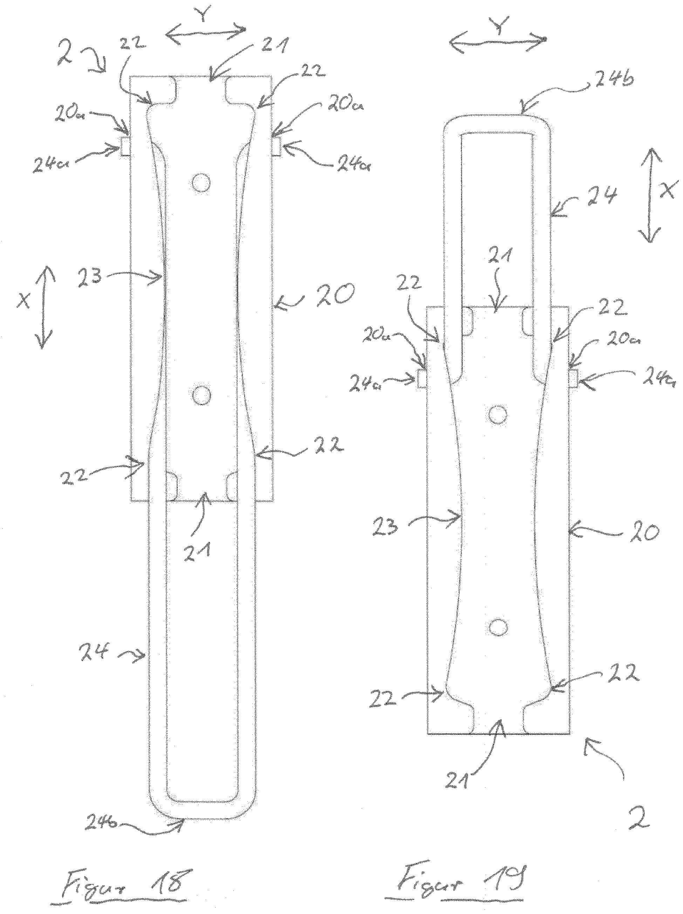

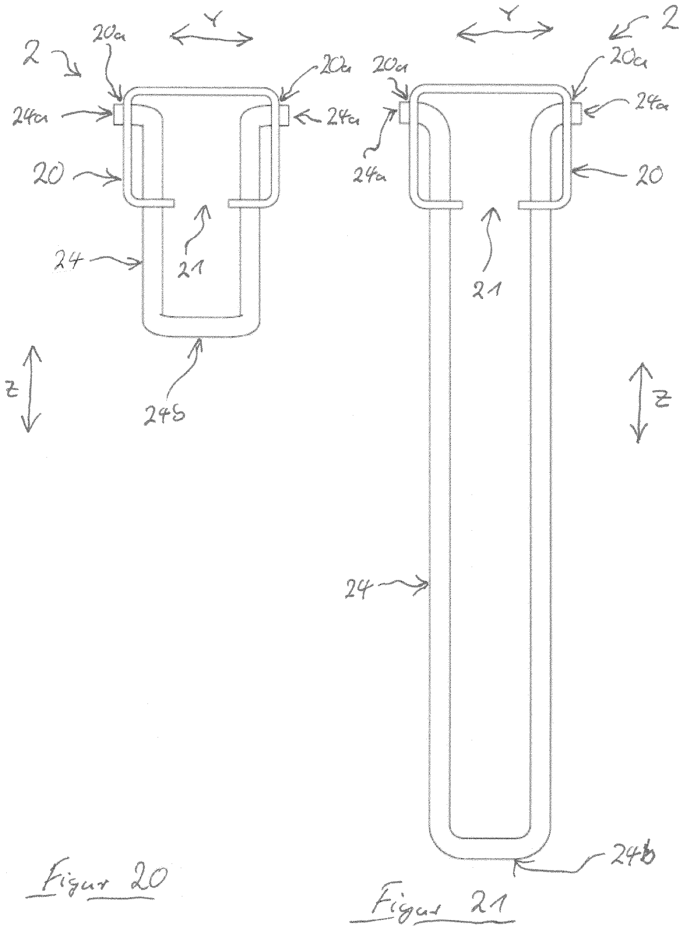

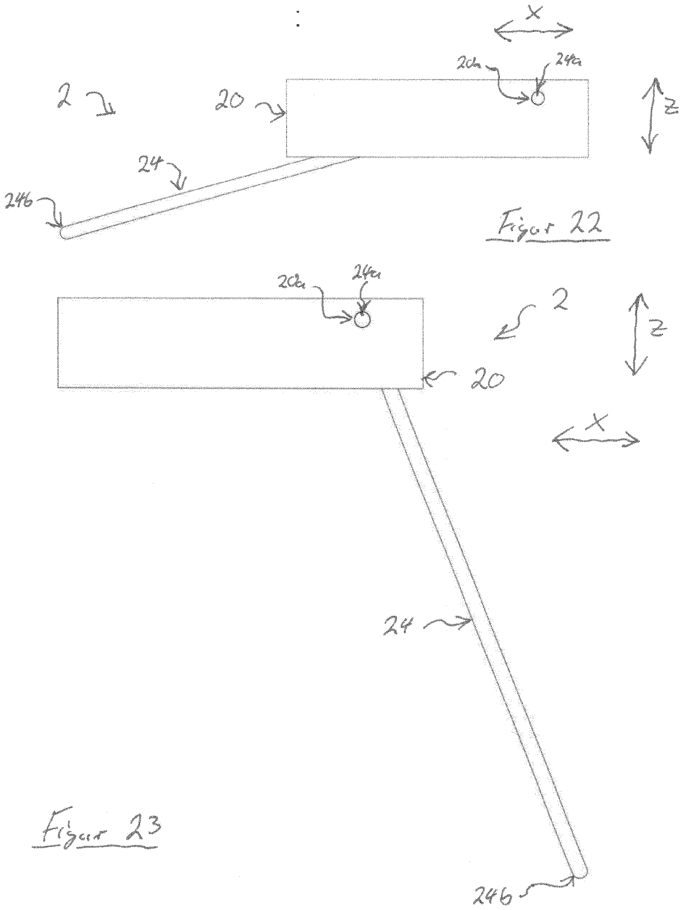

Der ausklappbare Ständer 2 weist eine Ständerhalterung 20 auf, welche kastenförmig bzw. quaderförmig ausgebildet ist und sich im Wesentlichen in der Längsrichtung X erstreckt, siehe z.B. Figuren 16 bis 23. Die Ständerhalterung 20 ist an der Stützschiene 16 des Gestells 10 angeschraubt. Die Ständerhalterung 20 ist in der Längsrichtung X beidseitig offen ausgebildet und weist an ihrer Unterseite eine Aussparung 21 auf, welche sich in der Längsrichtung X durchgängig erstreckt. Dies erlaubt die Herstellung der Ständerhalterung 20 als gebogenes Blechteil, was den Herstellungsaufwand geringhalten kann. Die Aussparung 21 weist dabei in der Längsrichtung X jeweils ein Aussparungsende 22 auf, welches jeweils durch zwei in der Querrichtung X aufeinander zu gerichtete hakenartige Vorsprünge gebildet wird. In der Längsrichtung X mittig zwischen den beiden Aussparungsenden 22 verengt sich die Aussparung 21 bogenförmig zu einer Aussparungseinschnürung 23.

Zum ausklappbaren Ständer 2 gehört auch ein Standelement 24 in Form eines Standbügels 24, welches bügelförmig und einseitig offen ausgebildet ist. Die beiden offenen Enden 24a der offenen Seite des Standelements 24 sind rechtwinkelig nach außen gerichtet und greifen jeweils in eine Durchgangsöffnung 20a der Ständerhalterung 20 ein, in welchen das Standelement 24 drehbar gelagert wird. Das geschlossene Ende 24b ist in der Querrichtung A gerade verlaufend ausgebildet und dient der Abstützung des Wagens 1 auf dem Untergrund.

Das Standelement 24 kann nun von dem Benutzer mit der Hand zwischen den beiden Aussparungsenden 22 hin und her bewegt werden. Aufgrund seiner einseitig offenen Ausgestaltung kann das Standelement 24 in der Querrichtung Y durch die Aussparungseinschnürung 23 federnd eingedrückt und so vom Benutzer in beiden Richtungen entlang der Längsachse X über die Aussparungseinschnürung 23 hinweggeführt werden. Hierdurch kann die Aussparungseinschnürung 23 auch einen Druck auf das Standelement 24 ausüben, um eine Bewegung des Standelements 24 in der Längsrichtung X zu jedem der beiden Aussparungsenden 22 hin zu bewirken oder zumindest zu unterstützen.

Wird das Standelement 24 vom Benutzer in der Längsrichtung X nach hinten geführt, so kommt das Standelement 24 an dem entsprechenden Aussparungsende 22 um Anliegen. Aufgrund der Positionierung der Durchgangsöffnungen 20a der Ständerhalterung 20 in der Längsrichtung X deutlich vor der Aussparungseinschnürung 23 sowie in der vertikalen Richtung Z nahe der Stützschiene 16 kann das geschlossene Ende 24b des Standelements 24 gegenüber dem Untergrund beabstandet und hierdurch das Standelement 24 eingeklappt werden.

Wird nun das Standelement 24 vom Benutzer in der Längsrichtung X nach vorne geführt, so kommt das Standelement 24 an dem entsprechenden gegenüberliegenden Aussparungsende 22 um Anliegen. Aufgrund der Positionierung der Durchgangsöffnungen 20a der Ständerhalterung 20 in der Längsrichtung X deutlich vor der Aussparungseinschnürung 23 sowie in der vertikalen Richtung Z nahe der Stützschiene 16 kann das geschlossene Ende 24b des Standelements 24 in diesem ausgeklappten Zustand in der vertikalen Richtung Z deutlich weiter zum Untergrund zeigen und auf dem Untergrund aufgesetzt werden. Hierdurch kann der Wagen 1 auf dem Untergrund abgestellt werden.

### BEZUGSZEICHENLISTE (Teil der Beschreibung)

- X: Längsrichtung; Tiefe; Länge
- Y: Querrichtung; Breite
- Z: vertikale Richtung; Höhe
- X, Y: Horizontale; horizontale Ebene

- 1: Wagen; Fahrradanhänger; Handwagen
- 10: Gestell; Rahmen; Tragkonstruktion
- 11: Achslagerung
- 12: Achse
- 13: Räder
- 14: Ladefläche
- 15: Ränder der Ladefläche 14
- 15a: Halterungen bzw. Durchgangsöffnungen der Ränder 15
- 16: Stützschiene

- 2: ausklappbarer Ständer
- 20: Ständerhalterung
- 20a: Durchgangsöffnungen der Ständerhalterung 20; Gelenkpunkte der Ständerhalterung 20
- 21: Aussparung
- 22: Aussparungsenden
- 23: Aussparungseinschnürung
- 24: Standelement; Standbügel
- 24a: offene Enden des Standelements 24
- 24b: geschlossenes Ende des Standelements 24

- 3: umklappbare Deichsel
- 30: Deichselhalterung
- 31: horizontalen Aufnahmebereich
- 31a: Durchgangsöffnungen des horizontalen Aufnahmebereichs 31 der Deichselhalterung 30
- 32: schräger Aufnahmebereich
- 32a: Durchgangsöffnungen des schrägen Aufnahmebereichs 32 der Deichselhalterung 30
- 33: Deichselkörper
- 33a: Befestigungsbereich des Deichselkörpers 33
- 33b: horizontale Durchgangsöffnungen des Befestigungsbereichs 33a des Deichselkörpers 33
- 33c: vertikale Durchgangsöffnungen des Befestigungsbereichs 33a des Deichselkörpers 33
- 34: Verbindungselemente
- 34a: Bolzen
- 34b: Bolzenköpfe
- 34c: Klemmelemente
- 34d: Verliersicherung
- 35: Kupplungselement; Fahrradanhängerkupplung
- 36: Griffbereich

## Patentansprüche

1. Wagen (1) zur Verwendung als Fahrradanhänger (1) oder als Handwagen (1)
mit einem Gestell (10)
mit einem Paar von Rädern (13) und
mit einer Ladefläche (14) und
mit einer umklappbaren Deichsel (3) mit einem Deichselkörper (33), welcher ausgebildet ist, in einer ersten Stellung mit einem Fahrrad verbunden und in einer zweiten Stellung von einer Hand eines Benutzers geführt zu werden,
**dadurch gekennzeichnet, dass**
die umklappbare Deichsel (3) eine an dem Gestell (10) angeordnete Deichselhalterung (30) aufweist,
wobei die Deichselhalterung (30) ausgebildet ist, den Deichselkörper (33) in der ersten Stellung und in der zweiten Stellung aufzunehmen.

2. Wagen (1) nach Anspruch 1, **dadurch gekennzeichnet, dass**
die Deichselhalterung (30) ausgebildet ist, den Deichselkörper (33) in der ersten Stellung zumindest im Wesentlichen in der Horizontalen (X, Y) verlaufend und in der zweiten Stellung schräg zur Horizontalen (X, Y) in der vertikalen Richtung (Z) nach oben zeigend aufzunehmen.

3. Wagen (1) nach Anspruch 1 oder 2, **dadurch gekennzeichnet, dass**
die Deichselhalterung (30) einen horizontalen Aufnahmebereich (31) aufweist, welcher ausgebildet ist, einen Befestigungsbereich (33a) des Deichselkörpers (33) in der ersten Stellung aufzunehmen, und
die Deichselhalterung (30) einen schrägen Aufnahmebereich (32) aufweist, welcher ausgebildet ist, den Befestigungsbereich (33a) des Deichselkörpers (33) in der zweiten Stellung aufzunehmen.

4. Wagen (1) nach einem der vorangehenden Ansprüche, **dadurch gekennzeichnet, dass**
die Deichselhalterung (30), vorzugsweise ein horizontaler Aufnahmebereich (31) der Deichselhalterung (30), wenigstens ein Paar von Durchgangsöffnungen (31a) aufweist, welche ausgebildet sind, in der ersten Stellung des Deichselkörpers (33) mittels eines Verbindungselements (34) mit einem Paar von horizontalen Durchgangsöffnungen (33b) des Deichselkörpers (33), vorzugsweise eines Befestigungsbereichs (33a) des Deichselkörpers (33), verbunden zu werden.

5. Wagen (1) nach einem der vorangehenden Ansprüche, **dadurch gekennzeichnet, dass**
die Deichselhalterung (30), vorzugsweise ein schräger Aufnahmebereich (32) der Deichselhalterung (30), wenigstens ein Paar von Durchgangsöffnungen (32a) aufweist, welche ausgebildet sind, in der zweiten Stellung des Deichselkörpers (33) mittels eines Verbindungselements (34) mit einem Paar von vertikalen Durchgangsöffnungen (33c) des Deichselkörpers (33), vorzugsweise eines Befestigungsbereichs (33a) des Deichselkörpers (33), verbunden zu werden.

6. Wagen (1) nach einem der vorangehenden Ansprüche, **dadurch gekennzeichnet, dass**
die Deichselhalterung (30) wenigstens ein Paar von Durchgangsöffnungen (31a, 32a) aufweist, welche ausgebildet sind,
in der ersten Stellung des Deichselkörpers (33) mittels eines Verbindungselements (34) mit einem Paar von horizontalen Durchgangsöffnungen (33b) des Deichselkörpers (33), vorzugsweise eines Befestigungsbereichs (33a) des Deichselkörpers (33), und
in der zweiten Stellung des Deichselkörpers (33) mittels eines Verbindungselements (34) mit einem Paar von vertikalen Durchgangsöffnungen (33c) des Deichselkörpers (33), vorzugsweise eines Befestigungsbereichs (33a) des Deichselkörpers (33),
verbunden zu werden.

7. Wagen (1) nach einem der Ansprüche 4 bis 6, **dadurch gekennzeichnet, dass** das Verbindungselement (34) ausgebildet ist, sich selbst zu sichern.

8. Wagen (1) nach einem der vorangehenden Ansprüche, **gekennzeichnet durch**
einen ausklappbaren Ständer (2)
mit einer Ständerhalterung (20), welche an dem Gestell (10) angeordnet ist, und
mit einem Standelement (24), welches klappbar von der Ständerhalterung (20) gehalten wird,
wobei die Ständerhalterung (20) eine Aussparung (21) aufweist, innerhalb welcher das Standelement (24) zwischen einem eingeklappten Zustand und einem ausgeklappten Zustand geklappt werden kann.

9. Wagen (1) nach Anspruch 8, **dadurch gekennzeichnet, dass**
die Aussparung (21) von zwei Aussparungsenden (22) begrenzt wird und
die Aussparung (21) zwischen den beiden Aussparungsenden (22), vorzugsweise mittig, eine Aussparungseinschnürung (23) aufweist.

10. Wagen (1) nach Anspruch 8 oder 9, **dadurch gekennzeichnet, dass**
das Standelement (24) ausgebildet ist, quer zur Klapprichtung einzufedern, wenn das Standelement (24) zwischen dem eingeklappten Zustand und dem ausgeklappten Zustand geklappt wird.

11. Wagen (1) nach einem der Ansprüche 8 bis 10, **dadurch gekennzeichnet, dass**
das Standelement (24) zwei offene Enden (24a) aufweist, welche jeweils in eine korrespondierende Durchgangsöffnung (20a) der Ständerhalterung (20) derart eingreifen, dass das Standelement (24) in den Durchgangsöffnungen (20a) der Ständerhalterung (20) drehbeweglich gehalten wird.

12. Wagen (1) nach einem der vorangehenden Ansprüche, **dadurch gekennzeichnet, dass**
die Ladefläche (14) in der Querrichtung (Y) seitlich jeweils einen in der vertikalen Richtung (Z) nach oben ragenden Rand (15) aufweist.

13. Wagen (1) nach Anspruch 12, **dadurch gekennzeichnet, dass**
die Ränder (15) der Ladefläche (14) jeweils wenigstens eine Halterung (15a), vorzugsweise eine Durchgangsöffnung (15a), aufweisen, welche ausgebildet ist, zum Halten von auf der Ladefläche (14) angeordneten Lasten verwendet zu werden.

14. Wagen (1) nach einem der vorangehenden Ansprüche, **dadurch gekennzeichnet, dass**
der Deichselkörper (33) an seinem dem Gestell (10) abgewandten Ende ein Kupplungselement (35) aufweist, welches ausgebildet ist, in der ersten Stellung des Deichselkörpers (33) mit einem Fahrrad verbunden zu werden.

15. Wagen (1) nach einem der vorangehenden Ansprüche, **dadurch gekennzeichnet, dass**
der Deichselkörper (33) im Bereich seines dem Gestell (10) abgewandten Endes einen Griffbereich (36) aufweist, welcher ausgebildet ist, von einer Hand eines Benutzers in der zweiten Stellung des Deichselkörpers (33) gegriffen zu werden.
